# EUROPEAN PATENT APPLICATION

(11) **EP 1 698 802 A2**
(43) Date of publication of application: **06.09.2006**
(21) Application number: 06251155.5
(22) Date of filing: 03.03.2006
(51) Int. Cl.: F16G 11/10, F16G 11/04

(54) **Cable gripping device**

(30) Priority: 04.03.2005 US 658628 P
(71) Applicant: Thomas & Betts International, Inc., Wilmington, Delaware 19809 (US)
(72) Inventor: Cai, Xueming, Collierville, Tennessee (US); Bartholomew, Paul, Somerville, Tennessee (US)
(74) Representative: Howick, Nicholas Keith

(57) **Abstract**

A device (30) is provided for gripping a cable (10) having a free end. The device includes a first entrance port (42) for receiving the free end of the cable. A first exit port (44) is in communication with the first entrance port (42) from where the free end of the cable exits the device. A second entrance port (46) is included for receiving the free end of the cable after it leaves the exit port. A second exit port (48) is in communication with the second entrance (46) port where the free end of the cable exits the device for the second time. A first cable guide (80) forms a pathway between the first entrance port (42) and the first exit port (44). A first retention member (58) is slidably disposed within the first cable guide (80) such that the first retention member (58) slides axially within the device only upon entrance of the cable within the first cable guide (80) or when the cable is pulled toward the first entrance port (42). A second cable guide (82) forms a pathway between the second entrance port (46) and the second exit port (48) and a second retention member (60) is slidably disposed within the second cable guide (82) such that the second retention member (60) slides axially within the device only upon entrance of the cable within the second cable guide (82) or when the cable is pulled toward the second entrance port (46).

## Description

### Field of the Invention

In general the present invention relates to gripping devices and, in particular, to a device for releasably gripping a cable. This application claims priority to U.S. Provisional Patent Application Number 60/658,628, filed March 4, 2005.

### Background

Industrial, commercial and residential construction sites typically require the suspension of equipment (such as HVAC units and ducts, lighting structures, various construction equipment and tools, and roofing materials) from structural members (such as overhead beams, ceilings, roofs, cranes, and girders). A suspension cable such as a metallic or rubber rope or wire is used to aid in this suspension. It is typically attached on one end to the structural member, inserted through a wedge device, looped around the equipment, and finally the cable is inserted through the wedge device a second time to retain the cable in place and suspend the equipment that is supported by the cable. Prior wedge devices have inner jaws or retention members that can twist within the housing and thereby weaken their grip on the cable. High stress is also created on the housing because the jaws do not move parallel to the cable within the housing. An angled piece of metal is used to pinch the cable, which creates less than desirable cable gripping and may sever the cable in half. Such prior wedge devices are not hermaphroditic and are difficult to manufacture and assemble. They also consist of many parts and are costly to manufacture.

### Summary

The present invention eliminates the above difficulties and disadvantages by providing an improved device for gripping a cable having a free end. The device comprises a first entrance port for receiving the free end of the cable and a first exit port that is in communication with the first entrance port from where the free end of the cable exits the device. A second entrance port is provided for receiving the free end of the cable after it leaves the exit port and is bundled through an eyelet, for example, that is attached to equipment or bundled around a group of generally linear items for shipping such as logs or electrical distribution poles. A second exit port is in communication with the second entrance port where the free end of the cable exits the device a second time. ,A, first cable guide forms an arcuate pathway between the first entrance port and the first exit port. The first cable guide also includes a first guide rail secured therein. A first retention member is slidably disposed within the first cable guide such that the first retention member slides axially within the device only upon entrance of the cable within the first cable guide or when the cable is pulled toward the first entrance port.

The first retention member further includes an arcuate grip member integrally formed therewith and a retention channel integrally formed therewith that is complementary in shape to the first guide rail and slidably mounted thereon such that only axial movement of the first retention member is permitted within the first cable guide. The first retention member includes a rounded surface and a grip surface that is in communication with the rounded surface. The cable abuts the rounded surface upon entrance into the first entrance port and simultaneously the cable is deflected and the retention member is biased axially, The grip surface contacts the cable when the cable is pulled toward the first entrance port. A second cable guide forms an arcuate pathway between the second entrance port and the second exit port. The second cable guide also includes a second guide rail secured therein. A second retention member is slidably disposed within the second cable guide such that the second retention member slides axially within the device only upon entrance of the cable within the second cable guide or when the cable is pulled toward the second entrance port. The second retention member includes an arcuate grip member integrally formed therewith and a retention channel integrally formed therewith that is complementary in shape to the second guide rail and slidably mounted thereon such that only axial movement of the second retention member is permitted within the second cable guide. The second retention member includes a rounded surface and a grip surface that is in communication with the rounded surface. The cable abuts the rounded surface upon entrance into the second entrance port and simultaneously the cable is deflected away from the second retention member and the second retention member is biased axially. The grip surface contacts the cable when the cable is pulled toward the second entrance port.

Moreover, the first cable guide has a convex portion and a concave portion. The grip member of the first retention member is slidably positioned adjacent the concave portion of the first cable guide when the cable is inserted into the first cable guide and slidably positioned adjacent the convex portion of the first cable guide when the cable is pulled toward the first entrance port such that the cable is wedged between the grip member and the convex portion of the first cable guide. The second cable guide also has a convex portion and a concave portion. The grip member of the second retention member is slidably positioned adjacent the concave portion of the second cable guide when the cable is inserted into the second cable guide and slidably positioned adjacent the convex portion of the second cable guide when the cable is pulled toward the second entrance port such that the cable is wedged between the grip member and the convex portion of the second cable guide.

The first cable guide includes a first guide rail secured therein and the first retention member includes a retention channel integrally formed therewith that is complementary in shape to the first guide rail and slidably mounted thereon such that only axial movement of the first retention member is permitted within the first cable guide upon entrance of the cable within the first cable guide or when the cable is pulled toward the first entrance port. The second cable guide includes a second guide rail secured therein and the second retention member includes a retention channel integrally formed therewith that is complementary in shape to the second guide rail and slidably mounted thereon such that only axial movement of the second retention member is permitted within the second cable guide upon entrance of the cable within the second cable guide or when the cable is pulled toward the second entrance port. A release means is provided that comprises two apertures into which an actuation member is inserted for moving the retention member and disengaging the first retention member and the second retention member from the cable.

An alternate device comprises a first entrance port for receiving the free end of the cable and a first exit port that is in communication with the first entrance port from where the free end of the cable exits the device. A second entrance port is provided for receiving the free end of the cable after it leaves the exit port and is bundled through an eyelet, for example, that is attached to equipment or bundled around a group of generally linear items for shipping such as logs or electrical distribution poles. A second exit port is in communication with the second entrance port where the free end of the cable exits the device a second time. A first cable guide forms a pathway between the first entrance port and the first exit port that is preferably angled but could be straight. While a second cable guide forms a pathway between the second entrance port and the second exit port. A dividing wall is located between the first cable guide and the second guide, the dividing wall forming part of the first cable guide and the second guide. A first retention member is slidably disposed within the first cable guide and includes a grip member integrally formed therewith and having a grip surface angled in parallel relationship to the dividing wall such that the grip surface contacts the cable and wedges it against the dividing wall when the cable is pulled toward the first entrance port. Further, a second retention member is slidably disposed within the second cable guide and including a grip member integrally formed therewith. The grip member has a grip surface angled in parallel relationship to the dividing wall such that the grip surface contacts the cable and wedges it against the dividing wall when the cable is pulled toward the second entrance port. The grip surface of the first retention member and the second retention member are complimentary in shape to the cable.

The first cable guide includes a first shaft adjacent thereto and the first retention member includes a guide member integrally formed therewith that is complementary in shape to the first shaft and slidably mounted thereon such that only axial movement of the first retention member is permitted within the first cable guide upon entrance of the cable within the first entrance port or when the cable is pulled toward the first entrance port.

The second cable guide includes a second shaft adjacent thereto and the second retention member includes a guide member integrally formed therewith that is complementary in shape to the second shaft and slidably mounted thereon such that only axial movement of the second retention member is permitted within the second cable guide upon entrance of the cable within the second entrance port or when the cable is pulled toward the second entrance port,

A release means is provided that comprises two apertures into which an actuation member is inserted for moving the retention member and disengaging the first retention member and the second retention member from the cable.

### Brief Description of the Drawings

FIG**.** 1 is a side elevational view of an equipment hanging system having a device for gripping a cable of the present invention.
FIG. 2 is a perspective view of the device for gripping a cable of the present invention.
FIG. 3 is a perspective view of the device for gripping a cable of the present invention.
FIG. 4 is a perspective view of a retention member of the device for gripping a cable of the present invention.
FIG. 5 is a perspective view of an alternate embodiment of the device for gripping a cable of the present invention.
FIG. 6 is a perspective view of the alternate embodiment of the device for gripping a cable of the present invention.
FIG. 7 is a perspective view of a retention member for the alternate embodiment of the device for gripping a cable of the present invention.
FIG. 8 is a rear elevational view of a bundling system having the device for gripping a cable of the present invention.

### Detailed Description of the Preferred Embodiment(s)

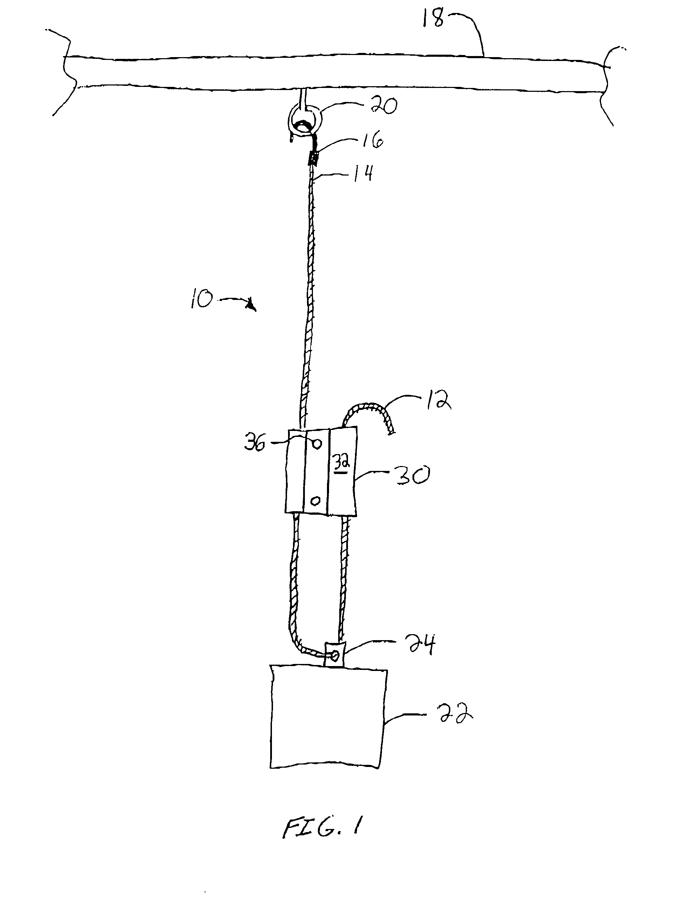

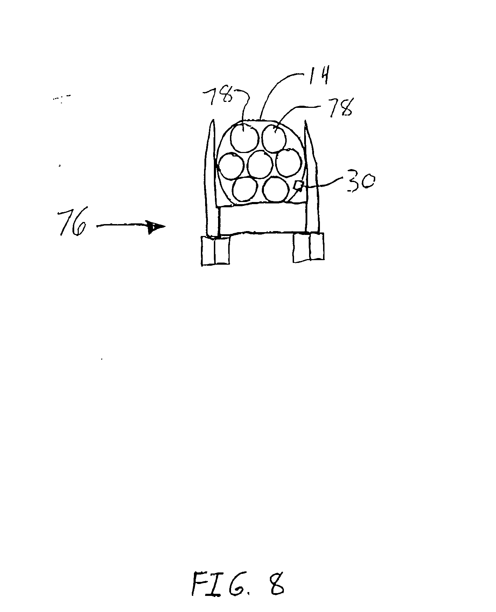

The above and other features, aspects, and advantages of the present invention will now be discussed in the following detailed description and appended claims, which are to be considered in conjunction with the accompanying drawings in which identical reference numbers designate like elements throughout the views. Shown in FIG. 1 is a system for hanging equipment 22 or bundling a group of objects such as electrical distribution poles 78 (Shown in FIG. 8) for shipping. The system includes a cable 10 that may be secured to a structural member 18 such as a support beam by a hook 16, the hook 16 being secured to an attachment end 14 of the cable 10 via a crimp device or soldering. The hook 16 engages an eyelet 20 that is mounted on the structural member 18. The free end 12 of the cable 10 is inserted through device 30 and then inserted through an eye 24 that is secured to the equipment 22 and finally back through device 30 that seoures the cable 10 from slipping and allows the equipment 22 to be suspended in air. The present system and device have many applications. Another application is shown in FIG. 8, which displays a truck 76 that is carrying a load of logs of electrical distribution poles 78. In this application device 30 and cable 10 are used to bundle poles 78.

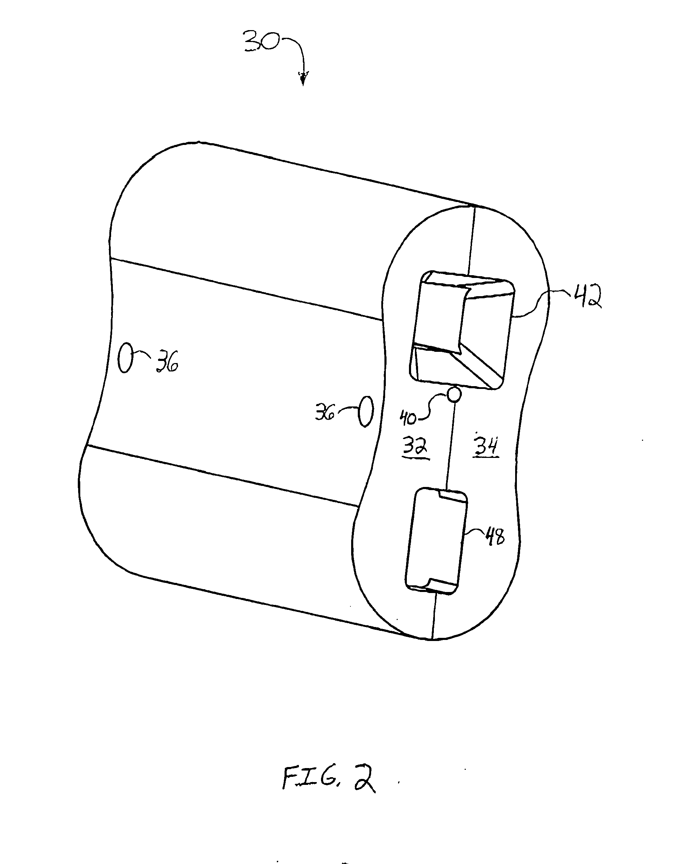

Turning now to the device 30 and that shown in FIG. 2, the device 30 is preferably constructed of a rust inhibited metal such as galvanized steel, but can also be constructed of a thermoformed plastic, Rivets 36 fit into apertures 30, as shown in FIG. 3, and are heated to stake the first shell 32 to the second shell 34.

The device 30 includes a first entrance port 42 for receiving the free end 12 of the cable 10. The first entrance port 42 is angled or beveled to aid in entrance of the free end 12 of cable 10. As shown in FIG. 3, device 30 includes a first exit port 44 that is in communication with the first entrance port 42. The first exit port 44 is where the free end 12 of the cable 10 exits the device 30 a first time. A second entrance port 46 is provided for receiving the free end 12 of the cable 10 after it leaves the first exit port 44 and is inserted through the eye 24, for example, that is attached to the equipment 22 or bundled around a group of generally linear items for shipping such items as logs or electrical distribution poles 78 as shown in FIG. 8. A second exit port 48 is in communication with the second entrance port 46 where the free end 12 of the cable 10 exits the device 30 a second time. As shown in FIGS. 2 and 3, the first exit port 44 and second exit port 48 are generally rectangular in shape to allow cable 10 to move laterally.

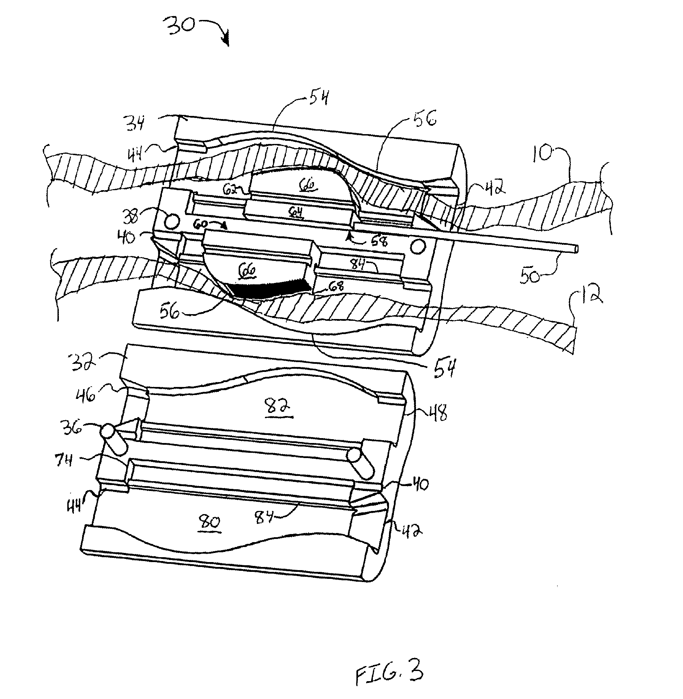

A first cable guide 80 is formed within device 30 and includes a first guide rail 84 secured therein. First guide rail 84 has an 1-shaped cross section. A first retention member 58 is slidably disposed within the first cable guide 80 on the first guide rail 84 such that it can only move axially. No internal pressure is applied to the first cable guide 80 such as a spring, but rather it frictionally glides along the first guide rail 84 when pressure from cable 10 is applied against the first guide rail 84 during installation, which will be discussed in further detail below, The first retention member 58 further includes retention channels 62 integrally formed therewith that are complementary in shape to at least part of the first guide rail 84 in both the first shell 32 and the second shell 34, and slidably mounted thereon such that only axial movement of the first retention member 58 is permitted within the first cable guide 80 upon entrance of the cable 10 within the first entrance port 42 or when cable 10 is pulled toward the first entrance port 42. The retention channels 62 are generally U-shaped and formed between an arcuate grip member 66 that is integrally formed on the first retention member 58 and guide member 64 as shown in FIGS. 3 and 4. Round surface 72 is disposed on one side of grip member 66. Grip surface 68 is in communication with round surface 72 and is cut into grip member 66 along approximately sixty percent of grip member 66 that is disposed opposite guide member 64. In operation, when cable 10 is inserted into first entrance port 42, cable 10 is deflected off rounded surface 72 away from the first retention member 58 and first retention member 58 is biased toward first exit port 44. Grip surface 68 contacts cable 10 only when cable 10 is pulled toward the first entrance port 42.

Moreover, the first cable guide 80 forms an arcuate pathway between the first entrance port 42 and the first exit port 44 and has a convex portion 56 and a concave portion 54. The grip member 66 of the first retention member 58 is slidably positioned adjacent at least part of the concave portion 54 of the first cable guide 80 when the cable 10 is inserted into the first entrance port 42 and is slidably positioned adjacent the convex portion 56 of the first cable guide 80 when the cable 10 is pulled toward the first entrance port 42 such that the cable 10 is wedged between the grip member 66 and the convex portion 56 of the first cable guide 80. Also in this state grip surface 68 contacts cable 10 to further prevent slippage of the cable 10 within device 30 along the longitudinal area of the grip surface 68.

The device 30 further includes a second entrance port 46 for receiving the free end 12 of the cable 10. The second entrance port 46 is angled or beveled to aid in entrance of the free end 12 of cable 10. As shown in FIG. 3, device 30 includes a second exit port 48 that is in communication with the second entrance port 46. The second exit port 48 is where the free end 12 of the cable 10 exits the device 30 a second time. A second entrance port 46 is provided for receiving the free end 12 of the cable 10 after it leaves the first exit port 44 and is inserted through the eye 24, for example, that is attached to the equipment 22 or bundled around a group of generally linear items for shipping such items as logs or electrical distribution poles 78 as shown in FIG. 8. The second exit port 48 is in communication with the second entrance port 46 where the free end 12 of the cable 10 exits the device 30 a second time. As shown in FIGS. 2 and 3, the first exit port 44 and second exit port 48 are generally rectangular in shape to allow cable 10 to move laterally.

As shown in FIGS, 2 and 3, cable release aperture 40 is disposed in the first shell 32 and the second shell 34 for releasing the grip of retention members 58, 60 on cable 10 by insertion of an actuation member 50 therein, In particular, aperture 40 is in communication with track 74 that is formed adjacent to first guide rail 84 and second guide rail 86. The actuation member 50 is preferably a plastic, metallic or wooden rod that is inserted into aperture 40 and abuts first retention member 58 or second retention member 60. When contact is made between actuation member 50 and the first retention member 58 or second retention member 60, the retention member is pushed toward the concave portion 54 of the first cable guide 80 or second cable guide 82 thereby releasing wedging pressure on cable 10 and allowing it to be removed from device 30.

A second cable guide 82 is formed within device 30 and includes a second guide rail 86 secured therein. Second guide rail 86 has an I-shaped cross section. A second retention member 60 is slidably disposed within the second cable guide 82 on the second guide rail 84. No internal pressure is applied to the second cable guide 82 such as a spring, but rather it frictionally glides along the second guide rail 86 when pressure from cable 10 is applied against the second guide rail 86 during installation of cable 10. The second retention member 60 further includes retention channels 62 integrally formed therewith that are complementary in shape to at least part of the second guide rail 86 in both the second shell 32 and the second shell 34, and slidably mounted thereon such that only axial movement of the second retention member 60 is permitted within the second cable guide 82 upon entrance of the cable 10 within the second entrance port 46 or when cable 10 is pulled toward the second entrance port 46. The retention channels 62 are generally U-shaped and formed between an arcuate grip member 66 that is integrally formed on the second retention member 60 and guide member 64 as shown in FIGS, 3 and 4. Round surface 72 is disposed on one side of the grip member 66. Grip surface 68 is in communication with round surface 72 and is cut into grip member 66 along approximately sixty percent of grip member 66 that is disposed opposite guide member 64. The grip surface 68 can be of any configuration to grip the cable 10, but is preferably constructed of abutting pyramid shapes. In operation, when cable 10 is inserted into second entrance port 46, cable 10 is deflected off rounded surface 72 away from the second retention member 58 and second retention member 60 is biased toward second exit port 48, Grip surface 68 contacts cable 10 only when cable 10 is pulled toward the second entrance port 46 and does not contact cable 10 when it is inserted into second entrance port 46 since cable 10 is deflected off rounded surface 72.

Moreover, the second cable guide 82 forms an arcuate pathway between the second entrance port 46 and the second exit port 48 and has a convex portion 56 and a concave portion 54. The grip member 66 of the second retention member 60 is slidably positioned adjacent at least part of the concave portion 54 of the second cable guide 82 when the cable 10 is inserted into the second entrance port 46 and is slidably positioned adjacent the convex portion 56 of the second cable guide 82 when the cable 10 is pulled toward the second entrance port 46 such that the cable 10 is wedged between the grip member 66 and the convex portion 56 of the second cable guide 82. Also in this state grip surface 68 contacts cable 10 to further prevent slippage of the cable 10 within device 30 along the longitudinal area of grip surface 68.

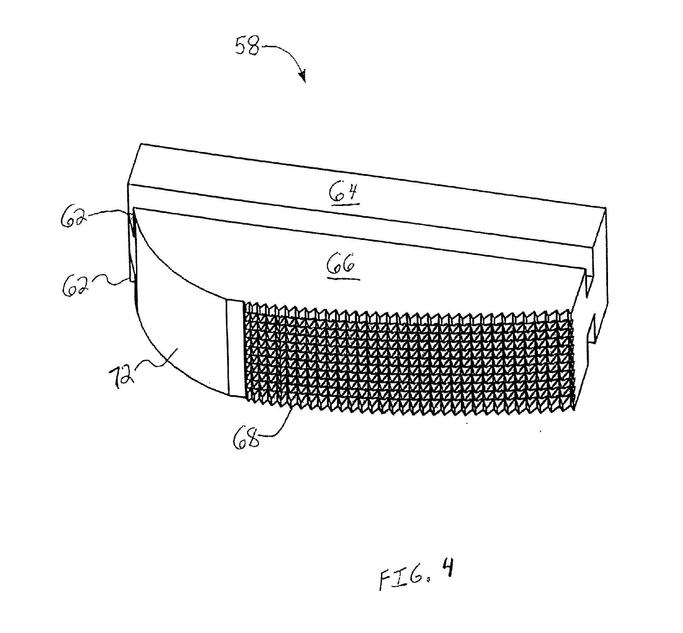

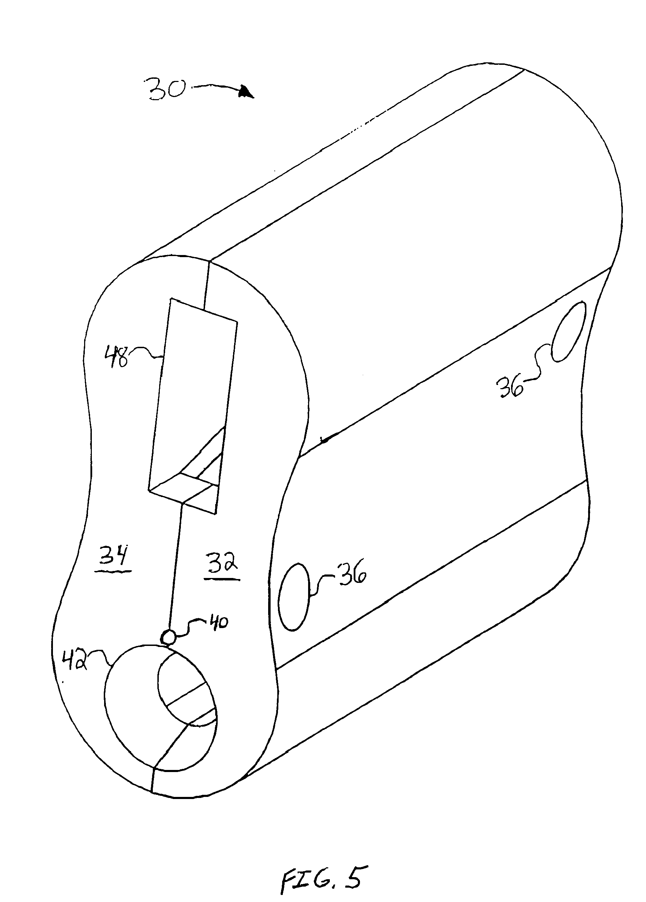

An alternate device 30 is shown in FIGS. 5-7. The device 30 is preferably constructed of a rust inhibited metal such as galvanized steel, but can also be constructed of a thermoformed plastic. Rivets 36 fit into apertures 30, as shown in FIG. 3, and are heated to stake the first shell 32 to the second shell 34.

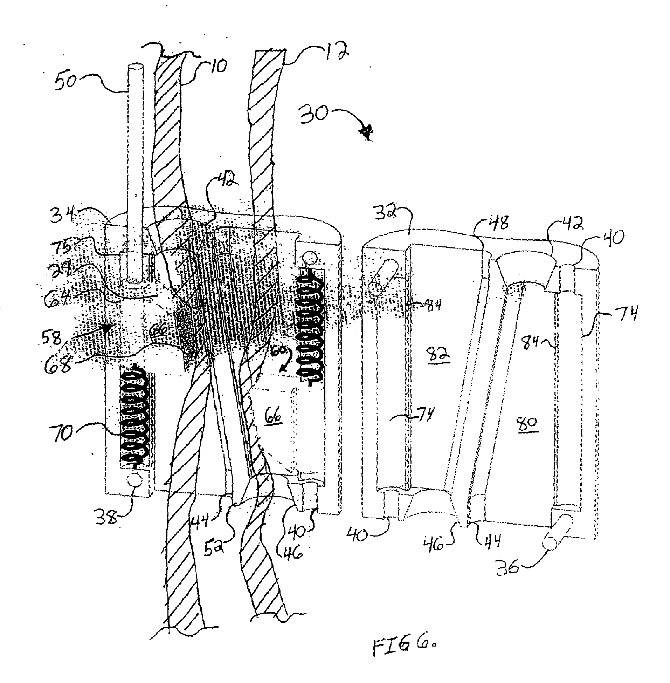

The device 30 includes a first entrance port 42 for receiving the free end 12 of the cable 10. The first entrance port 42 is angled to aid in entrance of the free end 12 of cable 10. As shown in FIG. 3, device 30 includes a first exit port 44 that is in communication with the first entrance port 42. The first exit port 44 is where the free end 12 of the cable 10 exits the device 30 a first time. A second entrance port 46 is provided for receiving the free end 12 of the cable 10 after it leaves the first exit port 44 and is inserted through the eye 24, for example, that is attached to the equipment 22 or bundled around a group of generally linear items for shipping such items as logs or electrical distribution poles 78 as shown in FIG, 8. A second exit port 48 is in communication with the second entrance port 46 where the free end 12 of the cable 10 exits the device 30 a second time. As shown in FIGS. 5 and 6, the first exit port 44 and second exit port 48 are generally rectangular in shape to allow cable 10 to move laterally once cable 10 exits device 30.

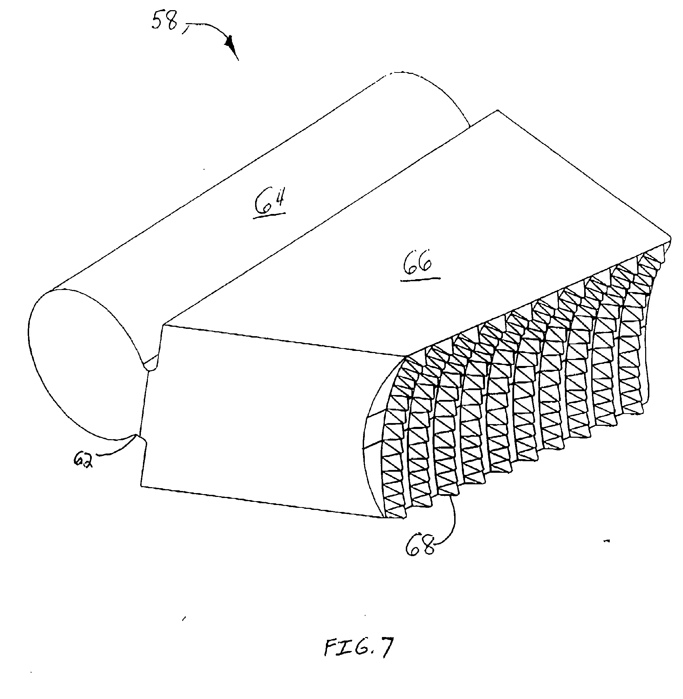

A first cable guide 80 forms a pathway between the first entrance port 42 and the first exit port 44 that widens toward the first exit port 44. A second cable guide 82 forms a pathway between the second entrance port 46 and widens toward the second exit port 48. A dividing wall 52 is preferable constructed of the same material as first shell 32 and second shell 34 and located between the first cable guide 80 and the second cable guide 82. The dividing wall 52 is preferably angled at 45 degrees but could be straight or angled at a greater or lesser degree. The dividing wall 52 forms part of the first cable guide 80 and the second cable guide 82. As shown in FIGS. 6 and 7, a first retention member 58 is provided that is preferably formed of metal or thermoformed plastic, and is slidably disposed within the first cable guide 80. Specifically, a first shaft 74 is disposed adjacent the first cable guide 80 and is a cylindrical cavity. The first retention member 58 includes a retention channel 62 integrally formed therewith and a guide member 64 that is complementary in shape to the first guide rail 84 and slidably mounted thereon. Spring 70, as shown in FIG. 6, is attached between one end of track 74 and guide member 64 thereby creating opposite force on first retention member 58 when axially biased. Since grip member 64 is cylindrical in shape and is complimentary to first shaft 74, which forms a cylindrical void into which the grip member 64 moves, only axial movement of the first retention member 58 is permitted within the first cable guide 80.

The first retention member 58 includes a grip member 66 integrally formed therewith. Grip member 66 has a grip surface 68 angled in parallel relationship to the dividing wall 52 such that the grip surface 68 contacts the cable 10 and wedges it against the dividing wall 52 when the cable 10 is pulled toward the first entrance port 42. Preferably grip surface 68 is concave in shape and has a plurality of abutting pyramid shapes formed thereon for conforming to the annular shape of cable 10 and gripping its surface along a longitudinal section.

In operation, upon entrance of the cable 10 within the first entrance port 42, cable 10 will abut angled surface 28 as shown in FIG. 6 simultaneously deflect away from retention member 58 and bias first retention member 58 axially toward first exit port 44. Cable 10 slides past grip surface 68 with only minimal retention force being applied to cable 10 since grip member 66 has been slid into the wide portion of first cable guide 80. When cable 10 is pulled toward the first entrance port 42, first retention member 58 is biased toward the first entrance port 42 only enough to allow for cable 10 to be tightly wedged between grip surface 68 and dividing wall 52.

Further, as shown in FIGS. 6 and 7, a second retention member 60 is provided that is preferably formed of metal or thermoformed plastic, and is slidably disposed within the second cable guide 82. Specifically, a second shaft 75 is disposed adjacent the second cable guide 82 and is a cylindrical cavity. The second retention member 60 includes a retention channel 62 integrally formed therewith and a guide member 64 that is complementary in shape to the second guide rail 86 and slidably mounted thereon. Spring 70, as shown in FIG. 6, is attached between one end of second shaft 75 and guide member 64 thereby creating opposite force on first retention member 58 when axially biased. Since grip member 64 is cylindrical in shape and is complimentary to second shaft 75, which forms a cylindrical void into which the grip member 64 moves, only axial movement of the second retention member 60 is permitted within the second cable guide 82.

The second retention member 60 includes a grip member 66 integrally formed therewith. Grip member 66 has a grip surface 68 angled in parallel relationship to the dividing wall 52 such that the grip surface 68 contacts the cable 10 and wedges it against the dividing wall 52 when cable 10 is pulled toward the second entrance port 46. Preferably grip surface 68 is concave in shape and has a plurality of abutting pyramid shapes formed thereon for conforming to the annular shape of cable 10 and gripping its surface along a longitudinal section.

In operation, upon entrance of the cable 10 within the second entrance port 46, cable 10 will abut angled surface 28 as shown in FIG. 6 simultaneously deflect away from retention member 60 and bias second retention member 60 axially toward second exit port 48, Cable 10 slides past grip surface 68 with only minimal retention force being applied to cable 10 since grip member 66 has been slid into the wide portion of second cable guide 82. When cable 10 is pulled toward the second entrance port 46, second retention member 60 is biased toward the second entrance port 46 only enough to allow for cable 10 to be tightly wedged between grip surface 68 and dividing wall 52.

As shown in FIGS. 5 and 6, release means is provided that comprises two apertures 40 into which an actuation member 50, which is preferably a rod, is inserted for moving the retention member 60 and disengaging the first retention member 58 and the second retention member 60 from the cable 10.

Although the invention has been described in detail above, it is expressly understood that it will be apparent to persons skilled in the relevant art that the invention maybe modified without departing from the spirit of the invention, Various changes of form, design, or arrangement may be made to the invention without departing from the spirit and scope of the invention. Therefore, the above mentioned description is to be considered exemplary, rather than limiting, and the true scope of the invention is that defined in the following claims.

## Claims

1. A device for gripping a cable having a free end, the device comprising:
a first entrance port for receiving the free end of the cable;
a first exit port in communication with the first entrance port from where the free end of the cable exits the device;
a second entrance port for receiving the free end of the cable after it leaves the exit port;
a second exit port in communication with the second entrance port where the free end of the cable exits the device;
a first cable guide forming a pathway between the first entrance port and the first exit port;
a first retention member slidably disposed within the first cable guide such that the first retention member slides axially within the device only upon entrance of the cable within the first cable guide or when the cable is pulled toward the first entrance port;
a second cable guide forming a pathway between the second entrance port and the second exit port; and
a second retention member slidably disposed within the second cable guide such that the second retention member slides axially within the device only upon entrance of the cable within the second cable guide or when the cable is pulled toward the second entrance port.

2. The device of claim 1 wherein the first retention member and the second retention member include a first arcuate grip member and a second arcuate grip member respectively, integrally formed therewith.

3. The device in claim 1 wherein the first retention member and the second retention member include a rounded surface and a grip surface in communication with the rounded surface,

4. The device of claim 3 wherein the cable abuts the rounded surface of the first retention member upon entrance into the first entrance port and abuts the rounded surface of the second retention member upon entrance into the second entrance port of simultaneously deflect the cable and bias the first retention member and the second retention member, respectively.

5. The device of claim 3 wherein the grip surface of the first retention member and the grip surface of the second retention member contact the cable when the cable is pulled toward the first entrance port or the second entrance port, respectively.

6. The device of claim 1 wherein the first cable guide includes a first guide rail secured therein.

7. The device of claim 6 wherein the first retention member includes a retention channel integrally formed therewith that is complementary in shape to the first guide rail and slidably mounted thereon such that only axial movement of the first retention member is permitted within the first cable guide upon entrance of the cable within the first entrance port or when the cable is pulled toward the first entrance port.

8. The device of claim 1 wherein the second cable guide includes a second guide rail secured therein.

9. The device of claim 8 wherein the second retention member includes a retention channel integrally formed therewith that is complementary in shape to the second guide rail and slidably mounted thereon such that only axial movement of the second retention member is permitted within the second cable guide upon entrance of the cable within the second entrance port or when the cable is pulled toward the second entrance.

10. A device for gripping a cable having a free end, the device comprising:
a first entrance port for receiving the free end of the cable;
a first exit port in communication with the first entrance port from where the free end of the cable exits the device;
a second entrance port for receiving the free end of the cable after it leaves the exit port;
a second exit port in communication with the second entrance port where the free end of the cable exits the device;
a first cable guide forming an arcuate pathway between the first entrance port and the first exit port, the first cable guide having a convex portion and a concave portion;
a first retention member slidably disposed within the first cable guide and including a grip member integrally formed therewith, the grip member being slidably positioned adjacent the concave portion of the first cable guide when the cable is inserted into the first entrance port and slidably positioned adjacent the convex portion of the first cable guide when the cable is pulled toward the first entrance port such that the cable is wedged between the grip member and the convex portion of the first cable guide;
a second cable guide forming an arcuate pathway between the second entrance port and the second exit port, the second cable guide having a convex portion and a concave portion; and
a second retention member slidably disposed within the second cable guide and including a grip member integrally formed therewith, the grip member being slidably positioned adjacent the concave portion of the second cable guide when the cable is inserted into the second entrance port and slidably positioned adjacent the convex portion of the second cable guide when the cable is pulled toward the second entrance port such that the cable is wedged between the grip member and the convex portion of the second cable guide,

11. The device in claim 1 wherein the first retention member and the second retention member include a rounded surface and a grip surface in communication with the rounded surface.

12. The device of claim 3 wherein the cable abuts the rounded surface of the first retention member upon entrance into the first entrance port and abuts the rounded surface of the second retention member upon entrance into the second entrance port of simultaneously deflect the cable and bias the first retention member and the second retention member, respectively,

13. The device of claim 3 wherein the grip surface of the first retention member and the grip surface of the second retention member contact the cable when the cable is pulled toward the first entrance port or the second entrance port, respectively.

14. The device of claim 1 wherein the first retention member and the second retention member include a first arcuate grip member and a second arcuate grip member respectively, integrally formed therewith.

15. The device of claim 10 wherein the first cable guide includes a first guide rail secured therein.

16. The device of claim 15 wherein the first retention member includes a retention channel integrally formed therewith that is complementary in shape to the first guide rail and slidably mounted thereon such that only axial movement of the first retention member is permitted within the first cable guide upon entrance of the cable within the first cable guide or when the cable is pulled toward the first entrance port.

17. The device of claim 10 wherein the second cable guide includes a second guide rail secured therein.

18. The device of claim 17 wherein the second retention member includes a retention channel integrally formed therewith that is complementary in shape to the second guide rail and slidably mounted thereon such that only axial movement of the second retention member is permitted within the second cable guide upon entrance of the cable within the second cable guide or when the cable is pulled toward the second entrance port.

19. A device for gripping a cable having a free end, the device comprising:
a first entrance port for receiving the free end of the cable;
a first exit port in communication with the first entrance port from where the free end of the cable exits the device;
a second entrance port for receiving the free end of the cable after it leaves the exit port;
a second exit port in communication with the second entrance port where the free end of the cable exits the device;
a first cable guide forming a pathway between the first entrance port and the first exit port;
a second cable guide forming a pathway between the second entrance port and the second exit port;
a dividing wall between the first cable guide and the second guide, the dividing wall forming part of the first cable guide and the second guide;
a first retention member slidably disposed within the first cable guide, the first retention member including a grip member integrally formed therewith and having a grip surface angled in parallel relationship to the dividing wall such that the grip surface contacts the cable and wedges it against the dividing wall when the cable is pulled toward the first entrance port; and
a second retention member slidably disposed within the second cable guide, the second retention member including a grip member integrally formed therewith and having a grip surface angled in parallel relationship to the dividing wall such that the grip surface contacts the cable and wedges it against the dividing wall when the cable is pulled toward the second entrance port.

20. The device of claim 19 wherein the grip surface of the first retention member and the grip surface of the second retention member are complimentary in shape to the cable.

21. The device of claim 19 wherein the first cable guide includes a first shaft disposed adjacent to the first cable guide,

22. The device of claim 21 wherein the first retention member includes a guide member integrally formed therewith that is complementary in shape to the first shaft and slidably mounted thereon such that only axial movement of the first retention member is permitted within the first cable guide upon entrance of the cable within the first entrance port or when the cable is pulled toward the first entrance port.

23. The device of claim 19 wherein the second cable guide includes a second shaft disposed adjacent to the second cable guide.

24. The device of claim 23 wherein the second retention member includes a guide member integrally formed therewith that is complementary in shape to the second shaft and slidably mounted thereon such that only axial movement of the second retention member is permitted within the second cable guide upon entrance of the cable within the second entrance port or when the cable is pulled toward the second entrance port.

25. A device for gripping a cable having a free end, the device comprising:
a first entrance port for receiving the free end of the cable;
a first exit port in communication with the first entrance port from where the free end of the cable exits the device;
a second entrance port for receiving the free end of the cable after it leaves the exit port;
a second exit port in communication with the second entrance port where the free end of the cable exits the device;
a first cable guide forming a pathway between the first entrance port and the first exit port; a first shaft disposed adjacent to the firs cable guide;
a second cable guide forming a pathway between the second entrance port and the second exit port; a second shaft disposed adjacent to the second cable guide;
a first retention member slidably disposed within the first cable guide, the first retention member including a guide member integrally formed therewith that is complementary in shape to the first shaft and slidably mounted thereon such that only axial movement of the first retention member is permitted within the first cable guide upon entrance of the cable within the first entrance port or when the cable is pulled toward the first entrance port; and
a second retention member slidably disposed within the second cable guide, the second retention member including a guide member integrally formed therewith that is complementary in shape to the second shaft and slidably mounted thereon such that only axial movement of the second retention member is permitted within the second cable guide upon entrance of the cable within the second entrance port or when the cable is pulled toward the second entrance port.

26. The device of claim 25 further comprising a dividing wall between the first cable guide and the second guide, the dividing wall forming part of the first cable guide and the second cable guide.

27. The device of claim 26 further comprising a grip member integrally formed on the first retention member and the second retention member and having a grip surface angled in parallel relationship to the dividing wall such that the grip surface contacts the cable and wedges it against the dividing wall when the cable is pulled toward the first entrance port or the second entrance port.

28. The device of claim 26 further comprising a grip member integrally formed on the first retention member and the second retention member and having a concave grip surface for contacting the cable and wedging the cable against the dividing wall when the cable is pulled toward the first entrance port or the second entrance port

29. The device of claim 25 further comprising release means for disengaging the first retention member and the second retention member from the cable.
